# NEUE EUROPÄISCHE PATENTSCHRIFT

(11) **EP 0 650 753 B2**
(45) Veröffentlichungstag und Bekanntmachung des Hinweises auf die Entscheidung über den Einspruch: **28.11.2001**
(45) Hinweis auf die Patenterteilung: 03.06.1998
(21) Anmeldenummer: 94116967.4
(22) Anmeldetag: 27.10.1994
(51) Int. Cl.: B01D 29/64, B01D 29/15, B01D 29/68

(54) **Rückspülbare Filtereinrichtung**
Bach-wash filtration device
Dispositif de filtration à nettoyage par contre-courant

(30) Priorität: 30.10.1993 DE 4337187; 09.07.1994 DE 4424232
(43) Veröffentlichungstag der Anmeldung: 03.05.1995
(73) Patentinhaber: HONEYWELL AG, 63067 Offenbach am Main (DE)
(72) Erfinder: Gocke, Eberhard, Dipl.-Ing., D-74821 Mosbach (DE)
(74) Vertreter: Fritz, Edmund Lothar, Dipl.-Chem.

(56) Entgegenhaltungen:
- EP-A- 0 309 743
- WO-A-88/07401
- DE-A- 2 852 611
- DE-C- 2 621 307
- US-A- 4 655 910

## Beschreibung

Die vorliegende Erfindung betrifft eine rückspülbare Filtereinrichtung nach dem Gattungsbegriff des Patentanspruches 1.

Eine derartige rückspülbare Filtereinrichtung ist aus der DE-28 52 611 C2 bekannt. Dort ist ein Filter konisch ausgebildet und eine Rückspülrinne sitzt drehbar auf einer von Hand drehbaren Welle und kann durch zusätzliches Anheben der Welle in Kontakt mit dem Filter gebracht werden. Zugleich wird beim Anheben der Welle ein Ablaßventil geöffnet, an das die Rückspülrinne angeschlossen ist, so daß beim Anheben und Drehen der Welle der Filter abschnittsweise gereinigt wird, indem das Wasser aus dem Filterinneren über die Rückspülrinne und das Ablaßventil abfließt, wobei sich auf der Außenseite des Filters angesammelte Schmutzteile mitgeführt werden.

Hiervon ausgehend ist es die Aufgabe der vorliegenden Erfindung, eine derartige rückspülbare Filtereinrichtung in einfacher Weise so auszugestalten, daß alleine durch öffnen des Ablaßventils die Rückspülung mit einer Drehung zwischen Filter und Rückspülrinne eingeleitet wird.

Die Lösung dieser Aufgabe gelingt gemäß den kennzeichnenden Merkmalen des Patentanspruches 1. Weitere vorteilhafte Ausgestaltungen der erfindungsgemäßen Filtereinrichtung sind den abhängigen Ansprüchen entnehmbar.

Die erfindungsgemäße Filtereinrichtung besitzt den Vorteil, daß ein einfacher Aufbau mit Wenigen Einzelteilen ermöglicht wird und daß eine intensive Rückspülung des gesamten Filtersiebes abschnittsweise durch einen konzentrierten Wasserstrahl erfolgt.

Einen Antrieb einer Reinigungseinrichtung durch das Medium selbst bei der Rückspülung zu bewirken, ist an sich bekannt und kann beispielsweise der EP 0 018 527 B1, der DE-41 05 109 A1 und der DE-OS 21 40 349 entnommen werden.

Anhand der Figuren der beiliegenden Zeichnung seien im folgenden Ausführungsbeispiele der erfindungsgemäßen Filtereinrichtung beschrieben. Es zeigen:
- Fig. 1: einen vertikalen Längsschnitt durch eine rückspülbare Filtereinrichtung gemäß einem ersten Ausführungsbeispiel der Erfindung;
- Fig. 2: einen Schnitt entlang der Linie A-A in Fig. 1;
- Fig. 3: einen vertikalen Längsschnitt durch eine rückspulbare Filtereinrichtung gemäß einem zweiten Ausführungsbeispiel der Erfindung; und
- Fig. 4: einen vertikalen Längsschnitt durch eine ruckspülbare Filtereinrichtung gemäß einem dritten Ausführungsbeispiel der Erfindung.

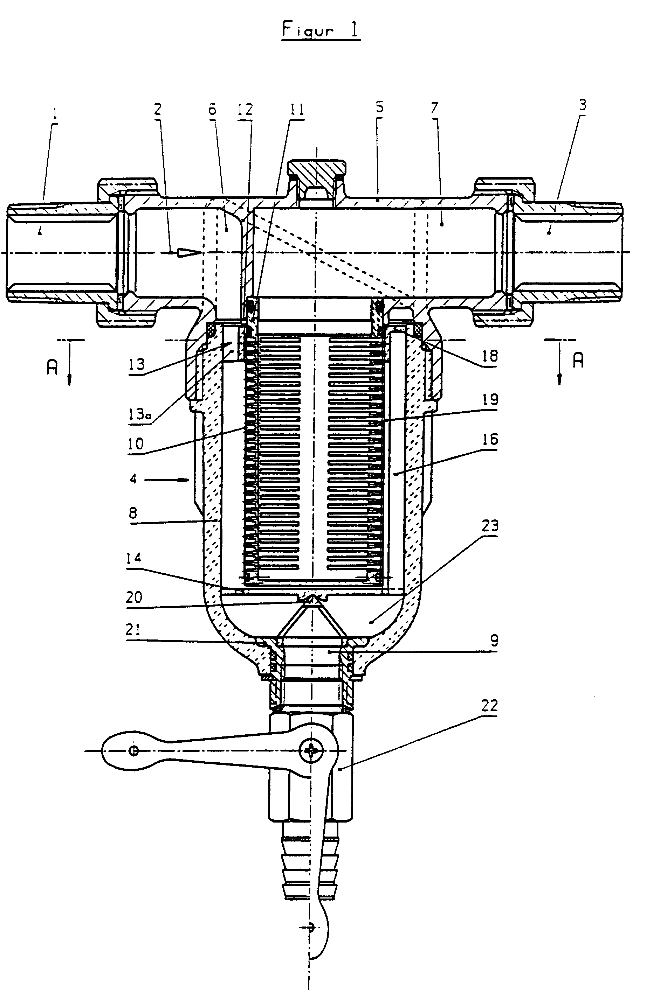

Gemäß Fig. 1 besitzt die rückspülbare Filtereinrichtung einen Einlaß 1, über welchen das ungefilterte Medium, vorzugsweise Wasser, in Pfeilrichtung 2 eintritt und sie besitzt einen Auslaß 3, durch welchen das gefilterte Wasser zu dem bzw. den nicht gezeigten Verbrauchern strömt. Ein Gehäuse 4 dieser Filtereinrichtung besteht im wesentlichen aus einem oberen Gehäuseteil 5, welcher mit einem Manometeranschluß zur Überprüfung des Drucks und/oder einem Entlüftungsstutzen versehen sein kann sowie einem unteren Gehäuseteil 8 mit einer verschließbaren Ablaßöffnung 9 für das beim Rückspülen gebildete abzuleitende Schmutzwasser. Durch den oberen Gehäuseteil 5 werden ein Vordruckraum 6 sowie ein Hinterdruckraum 7 gebildet. Der untere Gehäuseteil 8 besteht vorzugsweise aus durchsichtigem Kunststoff, um das Innere der Filtereinrichtung, insbesondere den Verschmutzungsgrad eines Filters 10 von außen erkennen zu können. Der obere Gehäuseteil 5 besteht hingegen aus Metall, wobei insbesondere ein nichtrostendes Metall Verwendung findet. Die beiden Schraubanschlüsse des Ein- und Auslasses verlaufen koaxial zueinander, um die Filtereinrichtung in einen geraden Rohrstrang einsetzen zu können. Außerdem ermöglichen sie das leichte Auswechseln der Filtereinrichtung, wenn dies im späteren Betrieb einmal erforderlich ist.

Der Filter 10 besitzt eine zylindrische Form und ist nach oben mit einem Ansatz 11 im Gehäuseteil 5 bis zu einem Anschlagbund 12 eingesetzt und starr gehalten.

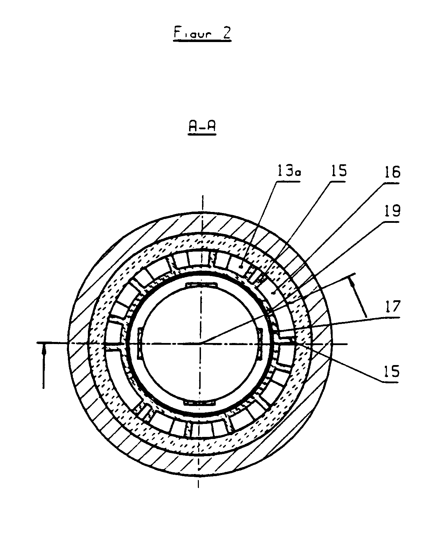

Unterhalb des Anschlagbundes 12 befindet sich zwischen dem Gehäuseteil 8 und dem Filter 10 ein Turbinenrad 13, welches mit einem Boden 14 unterhalb des Filters 10 über zwei beabstandete achsparallele Wände 15 (siehe Fig. 2), die eine Rückspülrinne 16 bilden, verbunden ist. Der Boden 14 ist im Bereich der Rückspülrinne 16 durchbrochen und unterbricht über den verbleibenden Umfang eine direkte Verbindung zwischen dem Einlaß 1 und der Ablaßöffnung 9, so daß das eintretende Medium gezwungen ist, den Filter 10 von außen nach innen zu durchfließen.

Die Rückspülrinne 16 selbst wird neben den beiden Wänden 15 noch durch eine durchgehende zylindrische Wand 17 mit einem achsparallelen Schlitz 19 und einem oberen Deckelboden 18 gebildet.

Die Lagerung der rotierenden Einheit, bestehend aus Turbinenrad 13, Rückspülrinne 16 und Boden 14 bzw. Deckel 18 erfolgt im Bereich des Turbinenrades 13 am Außendurchmesser des Filters 10 und am Boden 14 über ein zentrales Stützlager 20, welches mit einem im Boden des Gehäuseteils 8 befindlichen Einlegeteil 21 verbunden ist.

An dem Turbinenrad 13 sind mehrere Schaufeln 13a angeordnet, die vom Medium angeströmt werden, wenn ein Ablaßventil 22 geöffnet wird. Dadurch wird die Einheit, bestehend aus Turbinenrad 13, Rückspülrinne 16 und Boden 14 bzw. Deckel 18 in Drehung versetzt.

Aus dem vorstehend beschriebenen Aufbau ergibt sich folgende Funktionsweise der rückspülbaren Filtereinrichtung:
Im normalen Filterbetrieb tritt das Wasser am Einlaß 1 in den oberen Gehäuseteil 5 ein und fließt über den Vordruckraum 6 zur Außenseite des Filters 10 und nach Durchströmen des Filters 10 durch den Ansatz 11 über den Hinterdruckraum 7 zum Auslaß 3.

Der Rückspülvorgang wird durch Öffnen des Ablaßventiles 22 eingeleitet. Durch diese Maßnahme wird der Druck in der Kammer 23 und in der Rückspülrinne 16 sehr stark abgesenkt, was bewirkt, daß ein Teilwasserstrom nach dem Passieren des Turbinenrades 13 und des Filters 10 in umgekehrter Richtung von der Innenseite des Filters 10 über den Schlitz 19 in der Rückapülrinne 16 strömt und dabei an der Außenseite des Filters 10 anhaftende Schmutzteile abspült. Der Teilwasserstrom fließt nun von der Rückspülrinne 16 in die Kammer 23 und von dort über das Ablaßventil 22 ins Freie bzw. in ein Abflußsystem.

Durch die beim Durchströmen der Turbinenschaufeln 13a hervorgerufene Drehbewegung wird die Rückspülrinne 16 mit dem Schlitz 19 mehrfach an dem Filter 10 vorbeigeführt, wodurch ein pulsierender Rückspüleffekt auftritt, der eine gründliche Reinigung des Filters 10 bewirkt.

Es liegt auf der Hand, daß anstelle der nur einen Rückspülrinne 16 noch weitere über den Umfang verteilt vorgesehen sein können, wobei zur Vermeidung von Unwuchtproblemen eine symmetrische Verteilung der Rückspülrinnen über den Umfang vorzuziehen ist.

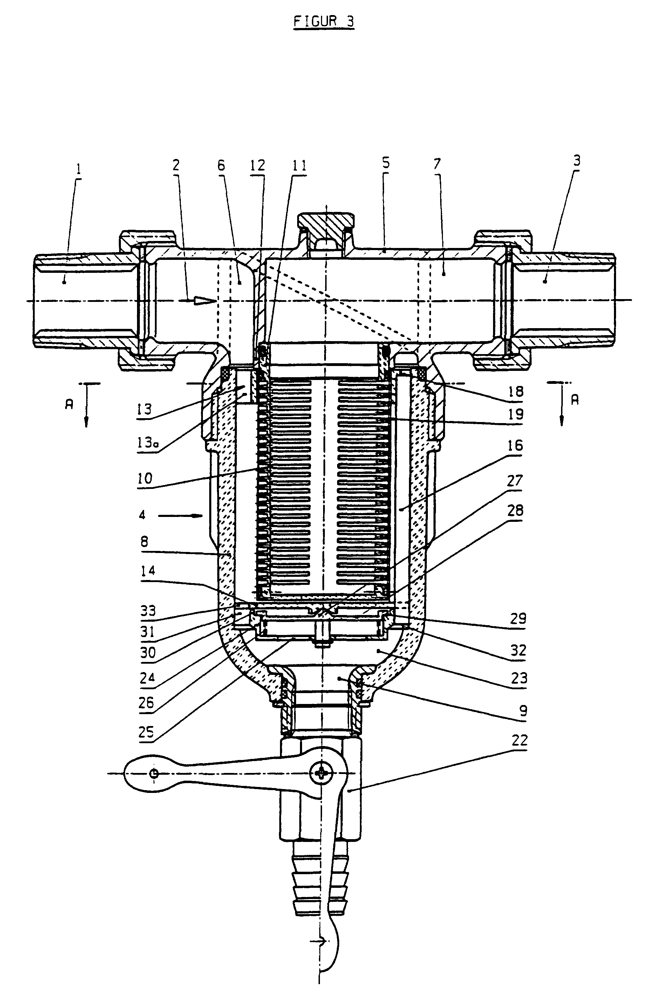

In einer weiteren Ausgestaltung des Rückspülfilters gemäß Fig. 3 kann die Lagerung der rotierenden Einheit, bestehend aus Turbinenrad 13 mit Rückspülrinne 16 und Boden 14 bzw. Deckel 18 über einen zusätzlichen Boden 24 in dem Gehäuseteil 8 erfolgen. In diesem Boden 24, der mit einer oder mehreren Öffnungen 25 versehen ist, ist eine über eine Feder 26 bewegliche Lagerstelle 27 angeordnet. Der Vorteil der beweglichen Lagerstelle 27 liegt darin, daß durch die Kraft der Feder 26 das Turbinenrad 13 an den Anschlagbund 12 gedrückt wird, was verhindert, daß bei normalem Filterbetrieb die Rückspülrinne 16 durch das Turbinenrad 13 in Drehung versetzt wird. Bei Inbetriebsetzung der Rückspülung durch Öffnen des Ablaßventiles 22 entsteht in der Kammer 23 eine Druckabsenkung, wodurch das Turbinenrad 13 mit der Rückspülrinne 16 durch einen sich bildenden Differenzdruck geringfügig abgesenkt wird, bis die Scheibe 28 auf der Schulter 29 aufsitzt.

Der Boden 24 bildet mit dem Boden 14, einem zylindrischen Kragen 30 und der Wandung des Gehäuseteiles 8 einen umlaufenden Kanal 31, der an einer oder mehreren Stellen am äußeren Umfang des Bodens 24 einen Durchbruch 32 aufweist. In diesen Kanal 31 tauchen die Wände 15 (siehe Fig. 2) der Rückspülrinne 16 ein. Der beim Rückspülen des Siebes abgespülte Schmutz fällt in den Kanal 31 und wird von den in den Kanal eintauchenden Wänden 15 zum Durchbruch 32 befördert.

Zum Abtransport von größeren Schmutzpartikeln, die sich auf dem Boden 14 ablagern, ist in dem Boden 14 eine Öffnung 33 vorgesehen, damit diese Schmutzpartikel in den Kanal 31 fallen können, um von dort in zuvor beschriebener Weise zum Durchbruch 32 zu gelangen.

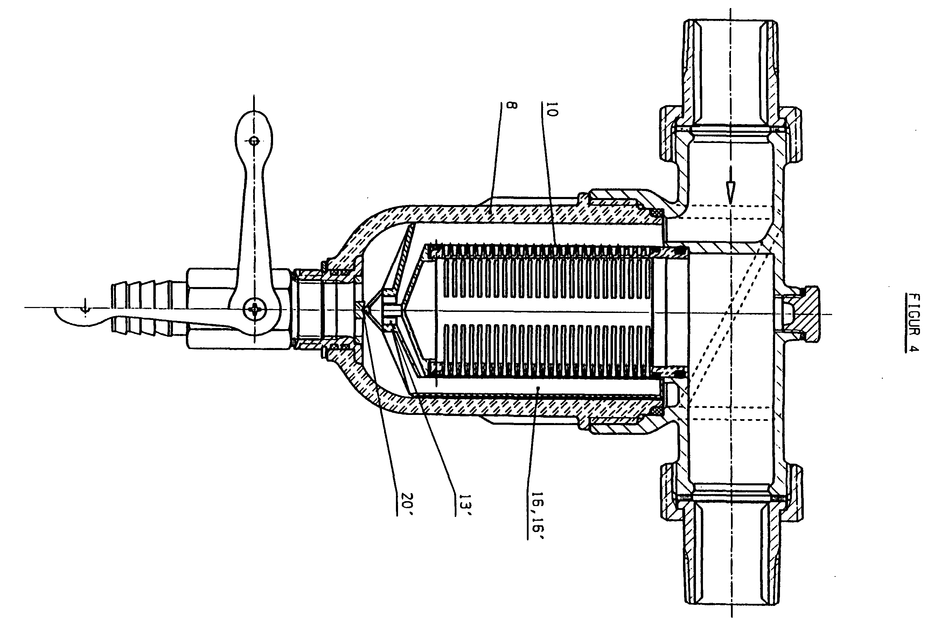

Gemäß einem weiteren in Fig. 4 dargestellten Ausführungsbeispiel sind zwischen Gehäuse 8 und Filter 10 zwei Rückspülrinnen 16, 16' um 180° versetzt über dem Kreisumfang angeordnet. Diese Rückspülrinnen 16, 16' sind unterhalb des Filters 10 zusammengeführt. Das Turbinenrad 13' ist als Nabe der zusammengeführten Rückspülrinnen 16, 16' ausgebildet und stützt sich einerseits an der Unterseite des Filters 10 und andererseits auf einem zentralen ortsfesten Stützlager 20' ab.

## Patentansprüche

1. Rückspülbare Filtereinrichtung, insbesondere für eine Hauswasseranlage, mit einem ortsfesten, koaxial zu einem Gehäuse angeordneten Filter (10) zwischen einem Ein-(1) und einem Auslaß (3), der im Normalbetrieb von außen nach innen und im Rückspülbetrieb wenigstens abschnittweise von innen nach außen durchströmt wird, mit einem zur Einleitung der Rückspülung betätigbaren Ablaßventil (22) und wenigstens einer zu dem Ablaßventil führenden Rückspülrinne (16), die sich parallel zu dem Filter auf dessen Außenseite erstreckt, wobei der Filter und die Rückspülrinne relativ zueinander drehbar sind, **dadurch gekennzeichnet, daß**
a) ein Turbinenrad (13) mit der Rückspülrinne (16) gekoppelt und im Rückspülweg angeordnet ist,
b) das Turbinenrad (13) mit der Rückspülrinne (16) und einem Boden (14), der die direkte Verbindung zwischen dem Einlaß (1) und dem Ablaßventil (22) unterbricht, eine Einheit bildet,
c) der Boden (14) im Bereich der Rückspülrinne (16) durchbrochen ist,
d) eine gegen den Filter (10) gerichtete Wand (17) der Rückspülrinne (16) einen durchgehenden achsparallelen Schlitz (19) aufweist, und
e) das Turbinenrad (13) im oberen Bereich der Rückspülrinne (16) mit dieser verbunden ist.

2. Filtereinrichtung nach Anspruch 1, **dadurch gekennzeichnet, daß** der Boden (14) an mindestens einer Stelle einen Durchbruch (33) außerhalb der Rückspülrinne (16) aufweist.

3. Filtereinrichtung nach Anspruch 1, **dadurch gekennzeichnet, daß** die Rückspülrinne (16) nach oben durch einen Deckelboden (18) verschlossen ist.

4. Filtereinrichtung nach einem der Ansprüche 1 bis 3, **dadurch gekennzeichnet, daß** zwei um 180° am Umfang versetzt angeordnete Rückspülrinnen (16, 16') angeordnet sind, die unterhalb des Filters (10) zusammengeführt sind und daß das Turbinenrad (13') im Wege zwischen den zusammengeführten Rückspülrinnen (16, 16') und dem Ablaßventil (22) angeordnet ist.

5. Filtereinrichtung nach einem der vorangehenden Ansprüche 1 bis 4, **dadurch gekennzeichnet, daß** sich die Einheit, bestehend aus Turbinenrad (13) und Rückspülrinne (16) auf einer gegen Federkraft beweglichen Lagerstelle (27) abstützt, um im normalen Filterbetrieb durch Anlage an einem Anschlagbund (12) die Drehung der Einheit zu verhindern und im Rückspülbetrieb die Drehung der Einheit freizugeben.

6. Filtereinrichtung nach Anspruch 5, **dadurch gekennzeichnet, daß** die Lagerung der Einheit, bestehend aus Turbinenrad (13) und Rückspülrinne (16) sowie Boden (14), über ein zentrales Stützlager (20) erfolgt.

7. Filtereinrichtung nach Anspruch 1 oder einem der folgenden Ansprüche, **dadurch gekennzeichnet, daß** eine Wand (15) der Rückspülrinne (16) als Wischer ausgebildet ist, der bei einer Rotation der Rückspülrinne die Innenwand des Gehäuses (8) reinigt.

8. Filtereinrichtung nach Anspruch 1 und 5, **dadurch gekennzeichnet, daß** unterhalb und im Abstand von dem Boden (14) ein weiterer Boden (24) fest angeordnet ist, gegen den die Lagerstelle (27) und der Boden (14) über eine Feder (26) axial verschiebbar abgestützt sind.

9. Filtereinrichtung nach Anspruch 8, **dadurch gekennzeichnet, daß** der weitere Boden (24) mit Öffnungen (25) versehen ist.

10. Filtereinrichtung nach Anspruch 9, **dadurch gekennzeichnet, daß** der weitere Boden (24) einen konzentrisch nach oben gerichteten Kragen (30) aufweist, der mit dem darüberliegenden Boden (14) und der Innenwand des Gehäuses (5) einen Ringkanal (31) bildet, in den Verlängerungen der Wände (15) der Rückspülrinne (16) durch den Boden (14) greifend eintauchen, wobei der weitere Boden (24) an dieser Stelle mit einem Durchbruch (32) versehen ist.

## Claims

1. Back-flushable filtering device, in particular for a house water installation, comprising a filter (10) being arranged coaxially to a housing between an inlet (1) and an outlet (3), which in its normal operational mode is flown through from the outside to the inside and in its back-flushing operational mode at least by sectors is flown through from the inside to the outside, a venting valve (22) being operable for initiating the back-flushing, and at least a rinsing channel (16) leading to the venting valve, whereat the filter and the rinsing channel are rotatable relative to each other,
**characterized in that**
a) a turbine blade wheel (13) is coupled to the rinsing channel (16) and is arranged in the rinsing water,
b) the turbine blade wheel (13) is unitary with the rinsing channel (16) and a bottom (14), which interrupts the direct connection between the inlet (1) and the venting valve (22),
c) the bottom (14) is perforated in the area of the rinsing channel (16),
d) a wall (17) of the rinsing channel (16) directed against said filter (10) comprises a paraxial throughslot (19), and
e) the turbine blade wheel (13) is connected to the rinsing channel (16) in its upper range.

2. Filtering device according to claim 1, **characterized in that** the bottom (14) at least on a place outside of the rinsing channel (16) comprises a perforation (33).

3. Filtering device according to claim 1, **characterized in that** the rinsing channel (16) at its upper side is closed by the bottom of a cover (18).

4. Filtering device according to one of claims 1 to 3, **characterized in that** two rinsing channels (16, 16') offset around the periphery by 180° are arranged, which below the filter (10) are connected to each other and that the turbine blade wheel (13') is arranged between the rinsing channels (16, 16') connected to each other and the venting valve (22).

5. Filtering device according to one of the preceding claims 1 to 4, **characterized in that** the unit consisting of the turbine blade wheel (13) and the rinsing channel (16) is supported by a bearing (27) being movable against the force of a spring in order to prevent during normal filter operation rotation of the unit by abutting against a stop collar (12) and to allow during back-flushing operation the rotation of the unit.

6. Filtering device according to claim 5, **characterized in that** the mounting of the unit consisting of the turbine blade wheel (13) and the rinsing channel (16) as well as the bottom (14) is provided by a central bearing (20).

7. Filtering claim according to claim 1 or one of the following claims, **characterized in that** one wall (15) of the rinsing channel (16) is formed as a wiper, which during rotation of the rinsing channel cleans the inner wall of the housing (8).

8. Filtering device according to claim 1 and 5, **characterized in that** below the bottom (14) and spaced from said bottom a further bottom (24) is stationarily arranged, against which the bearing (27) and the bottom (14) are supported by a spring (26) and being axially displaceable.

9. Filtering device according to claim 8, **characterized in that** the further bottom (24) is provided with apertures (25).

10. Filtering device according to claim 9, **characterized in that** the further bottom (24) comprises a concentrical and upright collar (30), which together with the overlying bottom (14) and the inner wall of the housing (5) is forming a ring channel (31) into which projections of the walls (15) of the rinsing channel (16) are dipping through the bottom (14), whereat the further bottom (24) at this spot is provided with a perforation (32).

## Revendications

1. Dispositif de filtration à nettoyage par rétrolavage, notamment pour une installation de distribution d'eau domestique, comportant un filtre fixe (10), qui est disposé coaxialement à un boîtier, entre une entrée (1) et une sortie (3) et qui, pendant le fonctionnement normal, est traversé de l'extérieur vers l'intérieur et, pendant l'opération de rétrolavage, est traversé au moins par endroits de l'intérieur vers l'extérieur; ainsi qu'une vanne d'évacuation (22), pouvant être actionnée pour déclencher le rétrolavage, et au moins un conduit de rétrolavage (16) aboutissant à la vanne d'évacuation, le filtre et le conduit de rétrolavage pouvant tourner l'un par rapport à l'autre, **caractérisé en ce que**
a) une roue de turbine (13) est accouplée au conduit de rétrolavage (16) et est disposée dans le trajet de rétrolavage,
b) la roue de turbine (13) forme une unité avec le conduit de rétrolavage (16) et un fond (14), qui interrompe le raccordement direct entre l'entrée (1) et la vanne d'évacuation (22),
c) le fond (14) est percé dans la zone du conduit de rétrolavage (16),
d) une paroi (17) du conduit de rétrolavage (16), tournée vers le filtre (10), possède une fente continue (19) parallèle à l'axe, et
e) la roue de turbine (13) est reliée au conduit de rétrolavage (16) dans la partie supérieure de ce dernier.

2. Dispositif de filtration selon la revendication 1, **caractérisé en ce que** le fond (14) possède, en au moins un emplacement, un perçage (33) situé à l'extérieur du conduit de rétrolavage (16).

3. Dispositif de filtration selon la revendication 1, **caractérisé en ce que** le conduit de rétrolavage (16) est fermé en haut par un fond de couvercle (18).

4. Dispositif de filtration selon l'une de revendications 1 à 3, **caractérisé en ce qu'**il est prévu deux conduits de rétrolavage (16, 16'), qui sont disposés suivant und décalage circonférentiel de 180° et qui sont réunis au-dessous du filtre (10), et **en ce que** la roue de turbine (13') est disposée dans le trajet entre les conduits de rétrolavage réunis (16, 16') et la vanne d'évacuation (22).

5. Dispositif de filtration selon l'une des revendications précédentes 1 à 4, **caractérisé en ce que** l'unité, constituée par la roue de turbine (13) et le conduit de rétrolavage (16), prend appui sur un point de support (27) déplaçable à l'encontre de la force d'un ressort, de manière à empêcher, pendant le fonctionnement normal du filtre, et ce par application contre un collet de butée (12), la rotation de l'unité et autoriser, pendant l'opération de rétrolavage, la rotation de l'unité.

6. Dispositif de filtration selon la revendication 5, **caractérisé en ce que** le montage en rotation de l'unité, constituée par la roue de turbine (13) et le conduit de rétrolavage (16) ainsi que par le fond (14), est réalisé par l'intermédiaire d'un palier d'appui central (20).

7. Dispositif de filtration selon la revendication 1 ou l'une des revendications suivantes, **caractérisé en ce qu'**une paroi (15) du conduit de rétrolavage (16) est réalisée sous la forme d'un organe d'essuyage qui, lors d'une rotation du conduit de rétrolavage, nettoie la paroi intérieure du boîtier (8).

8. Dispositif de filtration selon les revendications 1 et 5, **caractérisé en ce qu'**au-dessous et à distance du fond (14), est monté fixe un autre fond (24), contre lequel le point de support (27) et le fond (14) prennent appui, par l'intermédiaire d'un ressort (26), en étant déplaçables axialement.

9. Dispositif de filtration selon la revendication 8, **caractérisé en ce que** l'autre fond (24) est pourvu d'ouvertures (25).

10. Dispositif de filtration selon la revendication 9, **caractérisé en ce que** l'autre fond (24) possède un rebord (30), qui est dirigé concentriquement vers le haut et qui forme, ave le fond (14) situé au-dessus et la paroi intérieure du boîtier (5), un canal annulaire (31), dans lequel des prolongements des parois (15) du conduit de rétrolavage (16) pénètrent étroitement en traversant le fond (14), l'autre fond (24) étant pourvu d'un perçage (32) en cet emplacement.
